(19) Europäisches Patentamt / European Patent Office / Office européen des brevets

(11) **EP 2 711 736 B1**

(12) **FASCICULE DE BREVET EUROPEEN**

(45) Date de publication et mention de la délivrance du brevet:
**16.11.2016 Bulletin 2016/46**

(51) Int Cl.:
*G01S 19/21* (2010.01)  *H04B 1/10* (2006.01)

(21) Numéro de dépôt: **13198478.3**

(22) Date de dépôt: **13.12.2012**

(54) **Système de réception de signaux satellitaires**

Satellitensignal-Empfangssystem

System for receiving satellite signals

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2011 FR 1103884**

(43) Date de publication de la demande:
**26.03.2014 Bulletin 2014/13**

(62) Numéro(s) de document de la (des) demande(s) initiale(s) en application de l'article 76 CBE:
**12197077.6 / 2 605 045**

(73) Titulaire: **Thales**
**92400 Courbevoie (FR)**

(72) Inventeurs:
• **Chopard, Vincent**
**07300 Mauves (FR)**
• **Letestu, Franck**
**26300 Bourg-de-Péage (FR)**
• **Montagne, Bruno**
**26240 Saint-Barthelemy de Vals (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
**US-A1- 2005 042 998**

• **ZHANG YI ET AL: "Improved MWF algorithm applied in space time interference suppression", SIGNAL PROCESSING, COMMUNICATIONS AND COMPUTING (ICSPCC), 2011 IEEE INTERNATIONAL CONFERENCE ON, IEEE, 14 septembre 2011 (2011-09-14), pages 1-4, XP032065821, DOI: 10.1109/ICSPCC.2011.6061785 ISBN: 978-1-4577-0893-0**
• **ZHUANG X ET AL: "Reduced-Rank Space-Time Processing for Anti-Jamming GPS Receivers", TSINGHUA SCIENCE AND TECHNOLOGY, TSINGHUA UNIVERSITY PRESS, BEIJING, CN, vol. 14, no. 2, 1 avril 2009 (2009-04-01), pages 189-195, XP026057890, ISSN: 1007-0214, DOI: 10.1016/S1007-0214(09)70029-X [extrait le 2009-04-01]**
• **ZHAO HONGWEI ET AL: "Interference suppression in GNSS receiver using space-time adaptive processing", COMMUNICATION SOFTWARE AND NETWORKS (ICCSN), 2011 IEEE 3RD INTERNATIONAL CONFERENCE ON, IEEE, 27 mai 2011 (2011-05-27), pages 381-385, XP032049714, DOI: 10.1109/ICCSN.2011.6013617 ISBN: 978-1-61284-485-5**
• **Philip Ward: "What's Going On? RFI Situational Awareness in GNSS Receivers"", .insidegnss, 1 octobre 2007 (2007-10-01), XP055037623, Extrait de l'Internet: URL:http://www.insidegnss.com/auto/SepOct07-Ward-RFI[1].pdf [extrait le 2012-09-10]**
• **FRANCK LETESTU: "Space-Time Adaptive Processing for navigation", RADAR SYMPOSIUM (IRS), 2011 PROCEEDINGS INTERNATIONAL, IEEE, 7 septembre 2011 (2011-09-07), pages 769-773, XP031975373, ISBN: 978-1-4577-0138-2**

EP 2 711 736 B1

**Description**

La présente invention concerne un dispositif de réception de signaux satellitaires utilisant un ensemble de récepteurs. Ces signaux pouvant être perturbés par la présence d'au moins une source d'interférence et par le bruit thermique présent dans les composants des chaînes de réception. La présente invention permet d'améliorer la réception desdits signaux satellitaires en supprimant en particulier l'influence des sources d'interférence. Elle peut en particulier être utilisée dans des applications de localisation.

Il est connu pour effectuer la réception de ces signaux, tout en supprimant l'influence des sources de interférence, de calculer une matrice d'intercorrélation des signaux reçus et ensuite de déterminer, en utilisant des algorithmes spatio-temporels adaptatifs, les valeurs de coefficients de filtres à réponse impulsionnelle finie permettant de supprimer les influences des sources de interférence. Cette détermination des coefficients est réalisée à partir de la matrice d'intercorrélation. Afin d'améliorer le conditionnement du calcul de ces différents coefficients, il est connu de rajouter sur la diagonale de la matrice d'intercorrélation un ou plusieurs coefficients constants, respectivement associés à chaque élément de la diagonale. Cependant ces coefficients constants ne permettent pas une adaptation aux conditions d'environnement du système et à l'évolution de différentes contraintes du système. En particulier il n'y a pas d'adaptation ni à la puissance du bruit thermique, ni à la puissance des sources de interférence. La solution connue n'offre pas des performances optimales car elle ne permet pas de s'adapter aux différentes conditions de réception des signaux satellitaires.

La demande de brevet américain référence US2005/042998 est connu et présente une méthode de réjection des interférences reçues par un système de transmission satellitaire.

Le document "Improved MWF algorithm applied in space time interference suppression" de Zhang Yi et al. publié durant la conférence IEEE SIGNAL PROCESSING, COMMUNICATIONS AND COMPUTING (ICSPCC) en 2011 est connu. Ce document présente une méthode de suppression des interférences reçues par un récepteur GPS.

Le document "Reduced-Rank Space-Time Processing for Anti-Jamming GPS Receivers" de Zhuang X et al. publié dans la revue TSINGHUA SCIENCE AND TECHNOLOGY, volume 14, numéro 2, du 1 avril 2009 est connu. Ce document présente une méthode de suppression des interférences reçues par un récepteur GPS.

Le document "Interference suppression in GNSS receiver using space-time adaptive processing", de Zhao Hongwei et al. publié durant la conférence IEEE COMMUNICATION SOFTWARE AND NETWORKS (ICCSN) le 27 mai 2011 est connu. Ce document présente une méthode de suppression des interférences reçues par un récepteur GPS.

La présente invention vise notamment à remédier à ce problème en proposant un système de réception de signaux satellitaires, adaptable aux différents paramètres de l'environnement et des contraintes du système.

Ainsi il est proposé selon un aspect de l'invention, un système de réception de signaux satellitaires perturbés par au moins une source d'interférence et par un bruit thermique comprenant :

- des moyens de réception desdits signaux satellitaire,
- des moyens de filtrage desdits signaux satellitaire, afin de supprimer la perturbation desdites sources d'interférences
- des premiers moyens de détermination d'une première matrice d'intercorrélation des signaux satellitaire,
- des moyens d'ajout pour ajouter respectivement un premier coefficient à au moins un élément de la diagonale de ladite première matrice d'intercorrélation pour obtenir une deuxième matrice d'intercorrélation,
- des deuxièmes moyens de détermination, à partir de ladite deuxième matrice d'intercorrélation de seconds coefficients utilisés par lesdits moyens de filtrage, lesdits deuxièmes moyens de détermination utilisant un traitement spatio temporel,

caractérisé en ce qu'il comprend également

- des moyens de détection d'une première puissance dudit bruit thermique et une deuxième puissance de l'ensemble des sources de interférences à partir d'un dispositif de contrôle automatique de gain ou de ladite première matrice d'intercorrélation,
- des troisièmes moyens de détermination dynamique de la valeur desdits premiers coefficients, à partir de la première puissance, de ladite deuxième puissance, d'un niveau de réjection souhaité et d'un seuil de puissance des sources d'interférences, lesdits troisièmes moyens comprennent des moyens de calculs adaptés pour calculer lesdits premiers coefficients par la relation suivante :

$$C(i, j) = P_{bruit}(i) + \Delta_{bridage}(R_{max}, i)$$

dans laquelle $C(i,j)$ représente le premier coefficient à ajouter à l'élément de la diagonale correspondant au récepteur

i et à l'échantillon *j* de ladite première matrice, $P_{bruit}(i)$ représente le bruit thermique du récepteur *i*, $R_{max}$ le niveau déterminé de rejection maximum pour lequel la réjection doit être réalisée par le système et $\Delta_{bridage}(R_{max},i)$ est obtenu par les relations suivantes :

$$\Delta_{bridage}(R_{max},i) = 0 \text{ si } P_{int}(i) - P_{bruit}(i) < R_{max}$$

$$\Delta_{bridage}(R_{max},i) = R_{max} - (P_{int}(i) - P_{bruit}(i)) \text{ si } P_{int}(i) - P_{bruit}(i) \geq R_{max}$$

dans lesquelles $P_{int}(i)$ représente la puissance des interférences reçues par le récepteur *i*.

Ce système apporte donc l'avantage de pouvoir filtrer les signaux satellitaires reçus afin d'optimiser la réception de ces signaux en supprimant l'influence de sources de interférence, le tout en s'adaptant aux conditions d'utilisation du système en particulier la puissance du bruit thermique.

La matrice d'intercorrélation est définie par les relations suivantes, dans lesquelles il est considéré à titre d'exemple non limitatif que la matrice d'intercorrélation est définie sur P coefficients temporels et que le système comporte N récepteurs:

$x_k(t)$ représente le signal temporel échantillonné en sortie du récepteur k à l'instant t.

le vecteur $X_k(t) = [x_k(t) ... x_k(t+P-1)]$ représente P échantillons du signal $x_k(t)$.

$X(t) = [X_1(t)^T X_2(t)^T ... X_N(t)^T]^T$ représente la concaténation des vecteurs de P échantillons en provenance des N récepteurs, la vecteur est donc de taille NP

Ladite matrice d'intercorrélation Rxx de taille (NP)x(NP) est donc égale à :

$$R_{xx} = E\left(X(t)X(t)^H\right)$$

Dans ces relations *H* représente l'opérateur hermitien et T représente l'opérateur transposé.

Selon un mode de réalisation ledit niveau déterminé de réjection maximum $R_{max}$ est sensiblement nul.

Ainsi, il est possible d'adapter les premiers coefficients à ajouter sur la première matrice d'intercorrélation, à l'ensemble des paramètres d'environnement primordiaux affectant les performances de réception dudit système. Elles permettent aussi le bridage est la désactivation du système.

L'invention sera mieux comprise et d'autres avantages apparaîtront à la lecture de la description détaillée faite à titre d'exemple non limitatif et à l'aide des figures parmi lesquelles :

- La figure 1 présente un premier mode de réalisation du système suivant un aspect de l'invention.
- La figure 2 présente un deuxième mode de réalisation du système suivant un aspect de l'invention

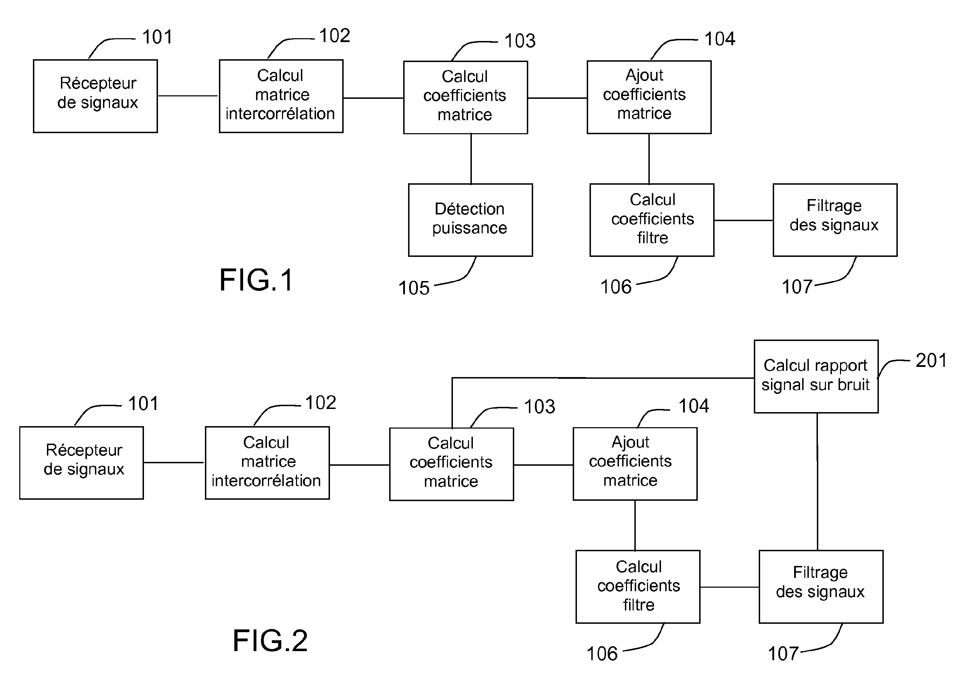

Le système, tel que présenté figure 1, comporte un ou plusieurs récepteurs 101 en charge de la réception des signaux satellitaires. À partir de ces signaux satellitaires, en provenance des différents récepteurs, un dispositif 102 calcule la première matrice d'intercorrélation des signaux reçus. Afin d'améliorer le conditionnement de ladite première matrice et donc de faciliter les calculs ultérieurs, un premier coefficient est ajouté sur tout ou partie des éléments de la diagonale de la première matrice. Le calcul de ce ou ces premiers coefficients est réalisé par le dispositif 103 et l'ajout par le dispositif 104.

Le calcul des premiers coefficients est réalisé par le dispositif 103 à partir de la puissance du bruit thermique présent sur les des différents récepteurs et de la puissance des signaux d'interférences. Le calcul de ces puissances est réalisé par le dispositif de détection de puissance 105. La valeur de la puissance du bruit thermique et des sources d'interférences peut-être calculée en utilisant la première matrice d'intercorrélation (sans les premiers coefficients ajoutés sur la diagonale) ou en utilisant les contrôleurs automatiques de gain inclus dans les récepteurs de signaux 101.

Dans le cas de l'utilisation de la première matrice d'intercorrélation, une méthode de calcul est basée sur l'identification des valeurs propres représentant le bruit thermique et les sources d'interférences (dans ce cas, le dispositif 105 est relié au dispositif 102). Différentes méthodes classiques de séparation des sous-espaces de bruit (thermique et sources de interférence) et de signal sont utilisables, par exemple le critère AIC (Aikaike Information Criterion). A partir des valeurs propres du sous-espace de signal, il est possible de calculer la puissance des sources d'interférence. Ensuite, à partir des valeurs propres du sous-espace de bruit et du nombre de points d'estimation de la première matrice d'intercorrélation (ce nombre de points est connu), il est possible d'estimer la variance des valeurs propres du bruit (qui suit une loi de Wishart) et donc d'en déduire une estimée de la puissance du bruit thermique. Ces méthodes ne nécessitent pas de calibration mais demandent une puissance de calcul importante.

Dans le cas de l'utilisation des contrôleurs automatiques de gain, il est nécessaire de faire une calibration de la commande de contrôle automatique de gain (dans ce cas, le dispositif 105 est relié au dispositif 101). Cette calibration peut-être réalisée au démarrage de l'équipement. Ensuite, il est possible d'estimer directement la puissance des sources d'interférence ainsi que la puissance du bruit thermique. Cette calibration est faite idéalement en s'isolant de l'environnement extérieur, par exemple en utilisant des interrupteurs entre la sortie de chaque antenne et l'ensemble des éléments de réception situés en aval. Pour les cas où cette isolation n'est pas faisable ou est trop faible, la calibration peut néanmoins être réalisée en environnement contrôlé (usine, en préparation de mission, etc.). Le document "What's Going On? RFI Situational Awareness in GNSS Receivers" de Phillip W. Ward publié dans le numéro de septembre/octobre 2007 de la revue « INSIDE GNSS » apporte des précisions sur l'utilisation des contrôleurs automatique de gains pour déterminer la puissance du bruit thermique et des interférences.

De plus dans le cas où le système doit être bridé, à un niveau de performance défini par un niveau de rejection maximale, ($R_{max}$) qui correspond à la perte de puissance de l'interférence entre l'entrée et la sortie du dispositif de filtrage 107, que doit permettre ce système, les premiers coefficients appliqués sur la diagonale de la première matrice d'intercorrélation suivent la relation suivante :

$$C(i,j) = P_{bruit}(i) + \Delta_{bridage}(R_{max},i)$$

dans laquelle $C(i,j)$ représente le premier coefficient à ajouter à l'élément de la diagonale correspondant au récepteur $i$ et à l'échantillon $j$ de ladite première matrice, $P_{bruit}(i)$ représente le bruit thermique du récepteur $i$, $R_{max}$ le niveau déterminé de rejection maximum pour lequel la réjection doit être réalisée par le système et $\Delta_{bridage}(R_{max},i)$ est obtenu par les relations suivantes :

$$\Delta_{bridage}(R_{max},i) = 0 \text{ si } P_{int}(i) - P_{bruit}(i) < R_{max}$$

$$\Delta_{bridage}(R_{max},i) = R_{max} - (P_{int}(i) - P_{bruit}(i)) \text{ si } P_{int}(i) - P_{bruit}(i) \geq R_{max}$$

dans lesquelles $P_{int}(i)$ représente la puissance des interférences reçues par le récepteur $i$.

Il est également possible que le niveau déterminé de rejection maximum $R_{max}$ soit nul, afin de provoquer une désactivation du système.

Un dispositif 106 mettant en oeuvre un algorithme de traitement spatio temporel permet ensuite de calculer les deuxièmes coefficients des filtres à réponses impulsionnelles finies permettant du supprimer l'influence des sources de interférence sur les signaux satellitaires. Le vecteur des deuxièmes coefficients des filtres peut être calculé en utilisant la formule suivante :

$$w = \alpha R^{-1} c$$

Dans cette formule a représente le coefficient de normalisation généralement égale à $1/c^H R^{-1}_c$. $c$ représente la contrainte spatio temporelle choisie et $R$ la deuxième matrice d'intercorrélation. $H$ représente l'opérateur hermitien et $^{-1}$ l'inversion de matrice.

Enfin des filtres à réponses impulsionnelles finies 107 sont mise en oeuvre en utilisant les deuxièmes coefficients précédents afin de supprimer l'influence des sources de interférences sur les signaux satellitaires.

La figure 2 présente une variante du système de la figure 1. Le système comporte l'ensemble des dispositifs du premier mode de réalisation présenté figure 1. De plus dans ce mode de réalisation un dispositif 201 permet de calculer le rapport entre la puissance des signaux filtrés et la puissance du bruit thermique. Le dispositif 103 effectue le calcul des premiers coefficients à ajouter sur la diagonale de la première matrice d'intercorrélation de manière à maximiser la valeur du rapport signal sur bruit. Le calcul du ou des premiers coefficients se fait à partir du rapport signal sur bruit obtenu en utilisant lesdits premiers coefficients puis par rétroaction sur lesdits premiers coefficients. Plusieurs méthodes d'optimisations sont possibles, par exemple des méthodes itératives comme la méthode du gradient stochastique (connu sous les thermes anglais de Least Mean Square, Recursive Least Square, steepest descent, etc.).

Il est possible d'améliorer la précision du calcul du rapport signal sur bruit en effectuant une des deux opérations suivantes :

- Reconstruire dans le système les signaux satellitaires qui devraient être reçus par le système, corréler ces signaux reconstruits avec les signaux filtrés et enfin calculer le rapport signal sur bruit de cette corrélation.
- Corréler les signaux filtrés avec une recopie des signaux en provenance des différents récepteurs et calculer le rapport signal sur bruit de cette corrélation.

Il est également possible d'utiliser un dispositif externe au système permettant de calculer le rapport signal sur bruit des signaux filtrés et de réintégrer cette valeur calculée dans le dispositif 103 de calcul de premiers coefficients.

## Revendications

1. Système de réception de signaux satellitaires perturbés par au moins une source d'interférence et par un bruit thermique comprenant :

    - des moyens de réception (101) desdits signaux satellitaire,
    - des moyens de filtrage (107) desdits signaux satellitaire, afin de supprimer la perturbation desdites sources d'interférences
    - des premiers moyens de détermination (102) d'une première matrice d'intercorrélation des signaux satellitaire,
    - des moyens d'ajout (104) pour ajouter respectivement un premier coefficient à au moins un élément de la diagonale de ladite première matrice d'intercorrélation pour obtenir une deuxième matrice d'intercorrélation,
    - des deuxièmes moyens de détermination (106), à partir de ladite deuxième matrice d'intercorrélation de seconds coefficients utilisés par lesdits moyens de filtrage, lesdits deuxièmes moyens de détermination (106) utilisant un traitement spatio temporel,

    **caractérisé en ce qu'**il comprend également

    - des moyens de détection (105) d'une première puissance dudit bruit thermique et une deuxième puissance de l'ensemble des sources de interférences à partir d'un dispositif de contrôle automatique de gain ou de ladite première matrice d'intercorrélation,
    - des troisièmes moyens de détermination (103) dynamique de la valeur desdits premiers coefficients, à partir de la première puissance, de ladite deuxième puissance, d'un niveau de réjection souhaité et d'un seuil de puissance des sources d'interférences, lesdits troisièmes moyens comprennent des moyens de calculs adaptés pour calculer lesdits premiers coefficients par la relation suivante :

$$C(i,j) = P_{bruit}(i) + \Delta_{bridage}(R_{\max}, i)$$

dans laquelle $C(i,j)$ représente le premier coefficient à ajouter à l'élément de la diagonale correspondant au récepteur $i$ et à l'échantillon $j$ de ladite première matrice, $P_{bruit}(i)$ représente le bruit thermique du récepteur $i$, $R_{\max}$ le niveau déterminé de rejection maximum pour lequel la réjection doit être réalisée par le système et $\Delta_{bridage}(R_{max}, i)$ est obtenu par les relations suivantes :

$$\Delta_{bridage}(R_{\max}, i) = 0 \text{ si } P_{int}(i) - P_{bruit}(i) < R_{\max}$$

$$\Delta_{bridage}(R_{\max}, i) = R_{\max} - (P_{int}(i) - P_{bruit}(i)) \text{ si } P_{int}(i) - P_{bruit}(i) \geq R_{\max}$$

dans lesquelles $P_{int}(i)$ représente la puissance des interférences reçues par le récepteur i.

2. Système suivant la revendication 1 dans lequel ledit niveau déterminé de réjection maximum $R_{\max}$ est sensiblement nul.

**Patentansprüche**

1. System zum Empfangen von Satellitensignalen, die durch wenigstens eine Störquelle und durch thermisches Rauschen gestört werden, das Folgendes umfasst:

- Mittel (101) zum Empfangen der Satellitensignale;
- Mittel (107) zum Filtern der Satellitensignale, um die Störung der Störquellen zu unterdrücken;
- erste Mittel (102) zum Bestimmen einer ersten Interkorrelationsmatrix der Satellitensignale;
- Additionsmittel (104) zum jeweiligen Addieren eines ersten Koeffizienten zu wenigstens einem Element der Diagonalen der ersten Interkorrelationsmatrix, um eine zweite Interkorrelationsmatrix zu erhalten;
- zweite Mittel (106) zum Bestimmen, auf der Basis der zweiten Interkorrelationsmatrix, von zweiten Koeffizienten, die von den Filtermitteln benutzt werden, wobei die zweiten Bestimmungsmittel (106) eine Raum-Zeit-Verarbeitung nutzen,

**dadurch gekennzeichnet, dass** es auch Folgendes umfasst:

- Mittel (105) zum Detektieren einer ersten Leistung des thermischen Rauschens und einer zweiten Leistung der Gesamtheit der Störquellen, auf der Basis einer automatischen Verstärkungsregelvorrichtung oder der ersten Interkorrelationsmatrix;
- dritte Mittel (103) zum dynamischen Bestimmen des Wertes der ersten Koeffizienten auf der Basis der ersten Leistung, der zweiten Leistung, eines gewünschten Rückweisungsniveaus und einer Leistungsschwelle der Störquellen, wobei die dritten Mittel Rechenmittel zum Berechnen der ersten Koeffizienten anhand der folgenden Relation umfassen:

$$C(i, j) = P_{rausch}(i) + \Delta_{klemm}(R_{max}, i),$$

wobei $C(i, j)$ den ersten Koeffizienten repräsentiert, der zu dem Element der Diagonalen entsprechend dem Empfänger $i$ und zum Sample $j$ der ersten Matrix zu addieren ist, $P_{rausch}(i)$ das thermische Rauschen des Empfängers $i$ repräsentiert, $R_{max}$ das vorbestimmte maximale Rückweisungsniveau ist, für das die Rückweisung vom System zu realisieren ist, and $\Delta_{klemm}(R_{max}, i)$ durch die folgenden Relationen erhalten wird:

$$\Delta_{klemm}(R_{max}, i) = 0 \, falls \, P_{int}(i)\text{-}P_{rausch}(i) < R_{max}$$

$$\Delta_{klemm}(R_{max}, i) = R_{max} - (P_{int}(i) - P_{rausch}(i)) \text{ falls } P_{int}(i) - P_{rausch}(i) \geq R_{max},$$

wobei $P_{int}(i)$ die Leistung der vom Empfänger $i$ empfangenen Störungen repräsentiert.

2. System nach Anspruch 1, wobei das vorbestimmte maximale Rückweisungsniveau $R_{max}$ im Wesentlichen null ist.

**Claims**

1. A system for receiving satellite signals disrupted by at least one interference source and by a thermal noise, comprising:

- means (101) for receiving said satellite signals;
- means (107) for filtering said satellite signals so as to suppress the disruption of said interference sources;
- first means (102) for determining a first inter-correlation matrix of said satellite signals;
- adding means (104) for respectively adding a first coefficient to at least one element of the diagonal of said first inter-correlation matrix so as to obtain a second inter-correlation matrix;
- second means (106) for determining, on the basis of said second inter-correlation matrix, second coefficients used by said filtering means, said second determination means (106) using a space-time process,

**characterised in that** it also comprises:

- means (105) for detecting a first power of said thermal noise and a second power of all of the interference sources on the basis of an automatic gain control device or of said first inter-correlation matrix;
- third means (103) for dynamically determining the value of said first coefficients, on the basis of the first power, of said second power, of a desired rejection level and of a power threshold for the interference sources, said third means comprise computation means adapted to compute said first coefficients using the following relation:

$$C(i, j) = P_{noise}(i) + \Delta_{clamping}(R_{max}, i),$$

where $C(i, j)$ represents the first coefficient to be added to the element of the diagonal that corresponds to the receiver $i$ and to the sample $j$ of said first matrix, $P_{noise}(i)$ represents the thermal noise of the receiver $i$, $R_{max}$ represents the determined level of maximum rejection, for which the rejection must be carried out by the system, and $\Delta_{clamping}(R_{max}, i)$ is obtained by the following relations:

$$\Delta_{clamping}(R_{max}, i) = 0 \text{ if } P_{int}(i)\text{-}P_{noise}(i) < R_{max}$$

$$\Delta_{clamping}(R_{max}, i) = R_{max} - (P_{int}(i) - P_{noise}(i)) \text{ if } P_{int}(i) - P_{noise}(i) \geq R_{max},$$

where $P_{int}(i)$ represents the power of the interferences received by the receiver $i$.

2. The system according to claim 1, wherein said determined level of maximum rejection $R_{max}$ is substantially zero.

FIG.1

101 Récepteur de signaux
102 Calcul matrice intercorrélation
103 Calcul coefficients matrice
104 Ajout coefficients matrice
105 Détection puissance
106 Calcul coefficients filtre
107 Filtrage des signaux

FIG.2

101 Récepteur de signaux
102 Calcul matrice intercorrélation
103 Calcul coefficients matrice
104 Ajout coefficients matrice
106 Calcul coefficients filtre
107 Filtrage des signaux
201 Calcul rapport signal sur bruit

## RÉFÉRENCES CITÉES DANS LA DESCRIPTION

**Documents brevets cités dans la description**

- US 2005042998 A

**Littérature non-brevet citée dans la description**

- **ZHANG YI et al.** Improved MWF algorithm applied in space time interference suppression. *IEEE SIGNAL PROCESSING, COMMUNICATIONS AND COMPUTING (ICSPCC),* 2011
- **ZHUANG X et al.** Reduced-Rank Space-Time Processing for Anti-Jamming GPS Receivers. *TSINGHUA SCIENCE AND TECHNOLOGY,* 01 Avril 2009, vol. 14 (2
- **ZHAO HONGWEI et al.** Interference suppression in GNSS receiver using space-time adaptive processing. *IEEE COMMUNICATION SOFTWARE AND NETWORKS (ICCSN),* 27 Mai 2011
- **PHILLIP W. WARD.** What's Going On? RFI Situational Awareness in GNSS Receivers. *INSIDE GNSS,* Septembre 2007